# EUROPEAN PATENT APPLICATION

(11) **EP 4 718 303 A1**
(43) Date of publication of application: **01.04.2026**
(21) Application number: 24383037.9
(22) Date of filing: 26.09.2024
(51) Int. Cl.: G06F 21/60, G06N 3/08, G06N 10/00, G06N 20/00, H04L 9/00, H04L 9/06, H04L 9/40

(54) **AN ENCRYPTION SYSTEM AND METHOD FOR QUANTUM ANNEALERS**

(71) Applicant: Multiverse Computing S.L., Gipuzkoa (ES)
(72) Inventor: Gentile, Fabio, 20115 Donostia-San Sebastián (ES); Dib, Mohammad, Toronto (CA); Vallejo Benitez-Cano, Jaime, 20017 Donostia-San Sebastián (ES); Cortines, Aser, 75012 Paris (FR); Orus, Roman, 20014 Donostia-San Sebastián (ES)

(57) **Abstract**

A computer-implemented method for an encryption for secure communication between devices during quantum annealing or QUBO-based routines, which are executed on a quantum device with configurations determined or supported by at least one classical computing device, wherein the encryption and decryption of data are managed by the classical computing device, the method characterized by within a QUBO based routine that includes set of pre-trained weak learners that provide output for test values and weight adjustment process for these weak learners and after the discretized to model it as a QUBO; using different encoding depths for different weights with the assigning the weights randomly according to the correlation in between the weak learners with the registration of this encoding information; shuffling the order of the variables randomly with the registering this order information; converting the QUBO matrix, which is stored in at least one storage medium and generating a string which includes two different number whose length matches the solution space dimensionality and registering the strings with spin flipping these numbers; decryption of the data which is received from at least one quantum device with encrypted by classical computing device before the transfer procedure with using encoding information, order information, spin flipped result, combination order information or suitable combination of them according to the encryption.

## Description

### TECHNICAL FIELD

The disclosure relates to an encryption technique, which is suitable for quantum computers.

Specifically, but without limitation, the disclosure pertains to an encryption technique designed for secure communication between a classical computer and quantum annealers, particularly when executing the QBoost or alpha-QBoost algorithms.

### BACKGROUND

Handling sensitive or classified data in computational tasks presents significant challenges. Often, users with limited computational resources need to access the computational power of a more capable machine. In most cases, these machines are cloud based powerful machines like high level CPU or GPU based machines, super computers or quantum computers. In some situations, users cannot trust third-party servers with their data, either due to the sensitive nature of the information or because of legal constraints.

In these cases, traditional computing methods employ various level data masking techniques. Most of time, it is necessary to resort to homomorphic encryption (HE). HE allows the client machine (user side) send encrypted data to server (third party machine). The server cannot perform decryption process, but it can perform computation on the data which is encrypted. The server returns the encrypted results to the client and decryption managed by the client to obtain the results. Thus, provides secure environment for both encryption and decryption process on the user side.

QBoost algorithm [QBoost, αQBoost], well known machine learning algorithm that leverages the capabilities of Quantum Computing. QBoost focuses on optimally selecting a set of weak classifiers to minimize the squared error between actual and predicted labels. A weak learner is a basic model or algorithm that performs slightly better than random guessing on a specific task. Despite its simplicity and limited accuracy, a weak learner is a fundamental component in ensemble methods, particularly in boosting algorithms. In the QBoost algorithm, this goal is shaped into a QUBO problem, which can be efficiently solved using a quantum annealer. A notable feature of the QBoost algorithm is the incorporation of a regularization term. This term enhances the model's generalizability by penalizing overly complex models, characterized by an excessive number of weak classifiers. In a quantum computing task, communication between a classical computing device and a quantum device occurs without encryption, which causes information security problems.

Published document Neven, H., Denchev, V.S., Rose, G. & Macready, W.G. (2012). "QBoost: Large Scale Classifier Training with Adiabatic Quantum Optimization" explains one of implementation of QBoost algorithm on a quantum device for a quantum optimization. A classical computing device sends the initialized data to quantum computing device without encryption. This lack of encrypted communication between the classical computing device and the quantum device results in no data security.

As a result, quantum computing, which involves hybrid computation systems, makes encryption even more complex because the cyphertext must be compatible with the techniques required to encode the data into a quantum register. Moreover, it is often the case that the user only has access to classical computational capabilities, so the encryption scheme needs to be classical and quantum compatible.

### SUMMARY

The disclosure is related to encryption system and method for quantum annealers to fulfil one, some or all aims mentioned above and will be obtained from the following detailed description. It aims to eliminate the abovementioned problems and to make a development in the relevant technical field. The disclosure is also related to: data processing systems with means for carrying out the methods; computer program products comprising instructions which, when the program products are executed by at least one computing unit, cause the at least one computing unit to carry out the methods; and computer-readable data carrier having stored there on the computer program products, which may be computer-readable non-transitory storage mediums in some examples.

This method ensures that the encryption scheme is both classical and quantum compatible, providing a secure environment for the encryption and decryption process. Also, quantum device resolves the results using encrypted data (without encryption). Thus, resolves secure data transfer between classical computing device and quantum computing device.

An objective of the disclosure, establish an encryption method for secure communication between devices during quantum annealing or QUBO based routines which are executed on a quantum device with configurations that are determined/supported by at least one classical computing device.

Another objective of the disclosure, encode the data into quantum register, which is located on a quantum annealer, as a cyphertext on classical computing device before sending the data to quantum device and after receiving the data from quantum device.

Another objective of the disclosure built secure communication between a classical computer and quantum annealers, particularly when executing the QBoost or alpha-QBoost algorithms.

In accordance with embodiments, an encryption method is provided for secure communication between devices during quantum annealing or QUBO-based routines, which are executed on a quantum device with configurations determined or supported by at least one classical computing device. The encryption and decryption of data are managed by the classical computing device. Within a QUBO-based routine that includes a set of pre-trained weak learners that provide output for test values and a weight adjustment process for these weak learners, the method involves encrypting the weights of the weak learners using at least one of the following steps or a combination of them, with storing combination order in at least one storage medium;
Using different encoding depths for different weights with the assigning the weights according to the correlation in between the weak learners with the registration of this encoding information;
Shuffling the order of the variables randomly with the registering this order information;
Converting the QUBO matrix, which is stored in at least one storage medium and generating a string which includes two different number whose length matches the solution space dimensionality and registering the strings with spin flipping these numbers;

And to decryption of the data which is received from at least one quantum device with encrypted by classical computing device before the transfer procedure using encoding information, order information, spin flipped result, combination order information or suitable combination of them according to the encryption.

In accordance with embodiments, the method is provided with selection batches of weak learners and selects those weak learners that perform better to construct the final strong classifier with repeating with different values of regularization parameter with checking the error. Thus, provides encrypted optimization without using original data or data weights.

In accordance with embodiments, the method is provided for if the error of the entire candidate list increases its accuracy, searching and adding for weak learner candidates to be added to the list.

In accordance with embodiments, the method is provided for an encryption method for a computing system according to the claim 1, characterized by converting the QUBO matrix, which is stored in at least one storage medium, into the equivalent Ising Hamiltonian with storing at least one storage medium, and generating a string which includes two different number whose length matches the solution space dimensionality and registering the strings with spin flipping these numbers to create private encryption key.

In accordance with embodiments, the method is provided with changing the diagonal elements of the Ising Hamiltonian accordingly to the encryption key. By changing the diagonal elements, the encryption method ensures that the resulting encryption key is secure and effective.

In accordance with embodiments, the method is provided for after converting the QUBO matrix and flipping the spins changing the signs of the weights of the weak learners according to the encryption key. Which created with registering the strings with spin flipping.

In accordance with embodiments, the method is provided with assigning weights according to correlation in between the weak learners and the ground truth.

In accordance with embodiments, the method is provided with after detecting the weak learners and encoding picked good weak learners to shallower/simplifier, which performs relatively well on the task at hand, and which has a strong correlation with the ground truth and encoding bad weak learners deeper. Bad weak learners to deeper with longer strings, which has weaker correlation with the ground truth rather than good weak learners. This step can be extended using a section of uncoupled (or weakly coupled) qubits holding random elements. To be compatible with the rest of the problem this partition needs to be uncoupled or very weakly couple with the rest of the problem and present a matrix sparsity matching the remaining part of the problem.

In accordance with other embodiments, encryption system for secure communication between devices during quantum annealing or QUBO-based routines, which are executed on a quantum device with configurations determined or supported by at least one classical computing device according to the method that defined any of the above claims, the system characterized by includes a main encoding module that uses different encoding depths for different weights with the assigning the weights randomly according to the correlation in between the weak learners with the registration of this encoding information on QUBO model; a secondary encryption module that converts the QUBO matrix, which is stored in at least one storage medium and generating a string with at least one string generation module, with two different number whose length matches the solution space dimensionality and registers the strings that spin flipped with a flipping module; a shuffling module that changes the order of the variables randomly with the registering this order information with a registration key; a decryption module decrypts of the data which is received from at least one quantum device with encrypted by classical computing device before the transfer procedure with using encoding information, order information, spin flipped result, combination order information or suitable combination of them according to the encryption.

In accordance with embodiments, the quantum device can be quantum annealer or VQM.

In accordance with embodiments, the system comprises at least one classical computer that includes a processor that initialized the data and at least one quantum device that communicated the classical computer and includes at least one quantum processor as a computing unit.

In summary, the encryption of weights in a quantum computing context involves a multi-step process that includes using different encoding depths, shuffling the order of variables, and converting the QUBO matrix to generate encryption strings. These steps ensure that the encryption scheme is robust, secure, and compatible with both classical and quantum computational capabilities.

In a preferred embodiment of the disclosure, the process of constructing a robust final classifier through QBoost involves several key steps:
**Training Weak Learners:** Initially, various weak learners are trained to classify the input data accurately. Their effectiveness is gauged by comparing their predictions against the ground truth derived from raw data.
**Weight Assignment to Weak Learners:** Following training, each weak learner is assigned a weight reflecting its contribution to the final strong classifier. This weighting is not arbitrary, but the result of an optimization process executed by a quantum annealer. The weights effectively find the relevance of each weak learner in the combined classifier. This process is crucial for the encryption method, as it ensures that the weights are encoded correctly and securely.
**Composition of the Strong Classifier:** Once the weights of the weak learners are optimized, these learners are aggregated to form the final strong classifier. This classifier represents a collective solution from individual contributions of the weighted weak learners, aiming for enhanced accuracy in predictions.

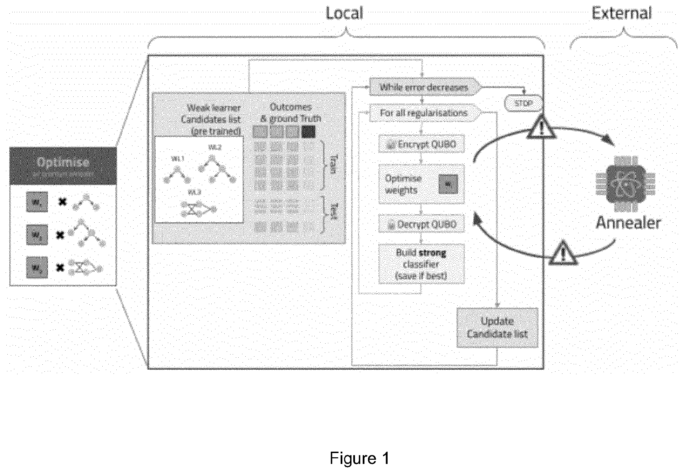

In a preferred embodiment of the disclosure, QBoost algorithm starts with a set of pre-trained weak learners that provide outputs for test values. Then, the optimization begins. A general scheme of the process is illustrated in Figure 1 that shows the QBoost workflow.

Method includes, selecting batches of weak learner candidates and selecting that performs better than the others to construct final strong classifier steps. This process is repeated with different values of regularization parameter. Then, if the error of the entire candidate list increases and accuracy decreases, searching for selection weak learner step continue for and adding more candidates to the list.

The weight of each weak learner is discretized and modeled as a QUBO for a Quantum Annealing process. Once the weights are discretized and modeled into a QUBO, the local encryption phase occurs. This creates an encrypted Quantum Annealing model, ready to be processed by the local part of the algorithm. The encryption key used in this phase is never shared, ensuring data security on the quantum server side. The encrypted weight data is then sent to the quantum server for the Quantum Annealing optimization process.

Once the process is completed the encrypted data is returned to classical computing system and decrypted using the private key, which created in encryption process and remains unshared. The decrypted output provides new optimized weights for the weak learner candidate list, and it is expected that the classification performance will improve after the optimization. Weak learners with small weights are discarded as they do not contribute significantly to the strong classifier's performance. Conversely, if the new weights are sufficiently relevant and improve the classification of the test data, the associated weak learners are added to the candidate list. This process is repeated until no more candidates are available or the strong classifier's error no longer decreases.

To optimize QBoost weights with QUBO, it is necessary to convert the weights' decimal values to a discretized range to model them as QUBO variables. This conversion has a negligible impact on accuracy; in most cases, only one variable is needed. The number of variables (and logical qubits) required to represent a single weight of a weak learner is defined as the bit-depth. Each weak learner's weight can have a different bit-depth depending on the need.

The protection scope of the disclosure is specified in the claims and cannot be limited to the description made for illustrative purposes in this brief and detailed description. It is clear that a person skilled in the art can present similar embodiments in the light of the above and following descriptions without departing from the main theme of the disclosure.

### BRIEF DESCRIPTION OF DRAWINGS

In this detailed description, encryption system and method for quantum annealers is described by means of examples only for clarifying the subject matter such that no limiting effect is created.
Figure 1 illustrates in a flowchart that explains the method and quantum system.

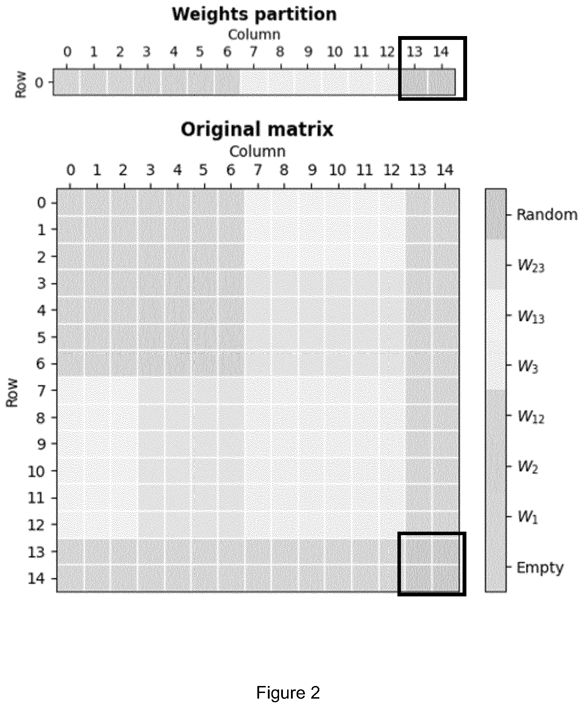

Figure 2 shows an example schematic partition of a QUBO matrix
Figure 3A and 3B shows an example shuffled solution space and equivalent QUBO matrix.
Figure 4 shows a QUBO matrix after shuffling with showing the flips.
Figure 5 shows an example decoding procedure.

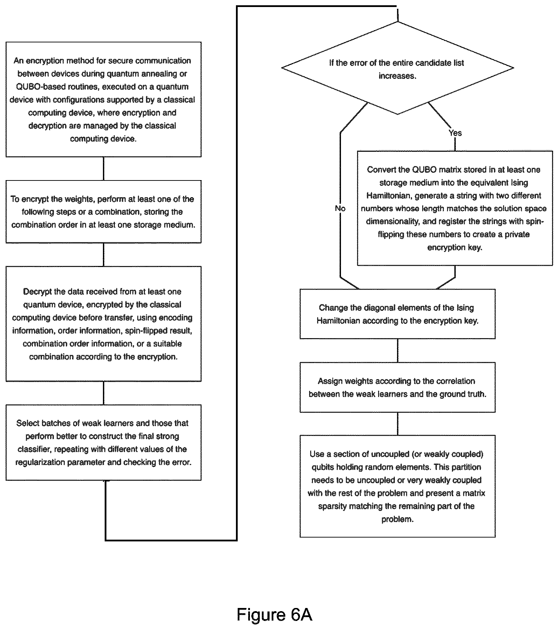

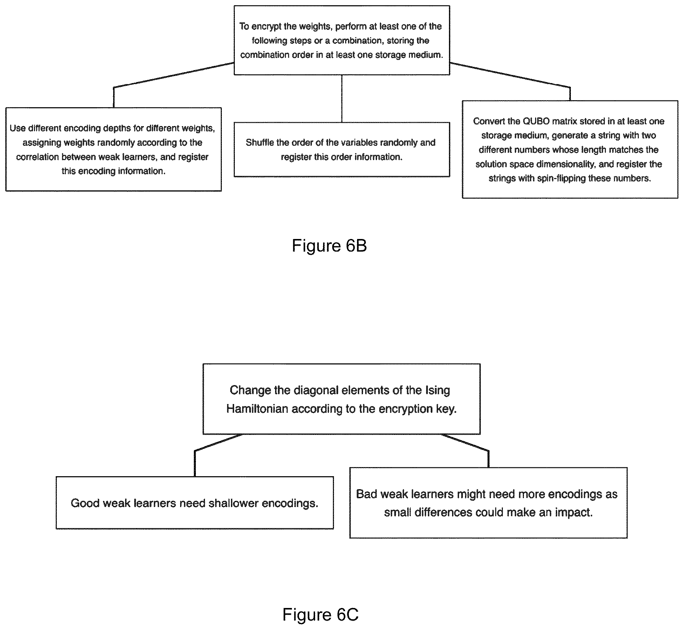

Figure 6A, 6B and 6C illustrates in a flowchart that shows the steps of a method in accordance with some embodiments of the disclosure.
Figure 7 represents some embodiments of the disclosure.
Figure 8 represents some embodiments of the disclosure.
Figure 9 shows the performance of the encryption method with comparison between not encrypted model and encrypted model.

### DESCRIPTION OF THE REFERENCE NUMBERS ILLUSTRATED IN THE FIGURES

10. Computing unit
   11. Encryption module
      111. Main encoding module
      112. Shuffling module
      113. Secondary encryption module
         1130. String generation module
         1131. Flipping module
      114. Encryption key module.
   12. Decryption module
20. Quantum device
30. Classical computing device
40. Communication unit
S. System

### DETAILED DESCRIPTION

In this detailed description, an encryption system and method for quantum annealers is described by means of examples only for clarifying the subject matter without any limitation of the scope of the disclosure.

The method encrypts QUBO based routines within the initializing process on the classical computing device (30) before sending the quantum device (20) using at least one communication device (40). The communication device can be any computer adaptable device like network card, router, wired communication system etc. Classical computing device (30) also decrypts the data received from quantum device (20) according to the encryption information, which is stored at least one storage medium. This method builds secure communication between a classical computer and quantum annealers, particularly when executing the QBoost or alpha-QBoost algorithms. Figure 1 illustrates in a flowchart that shows the steps of a method in accordance with some embodiments of the disclosure. This embodiment shows a weighted composition of weak learners is optimized through a cycle of optimizations requiring a call to an external solver, i.e. a quantum annealer.

Classical Computing Device (30) includes at least one computing unit (10) which manages the encryption and decryption of data. The classical computing device (30) encodes the data into a quantum register as a cyphertext before sending it to the quantum device (20) and decrypts the data after receiving it from the quantum device (20). The encrypted data is returned to the classical computing system (S) and decrypted using a private key.

A computer-implemented method for encrypt for secure communication between devices during quantum annealing or QUBO-based routines, which are executed on a quantum device with configurations determined or supported by at least one classical computing device, wherein the encryption and decryption of data are managed by the classical computing device, the method characterized by within a QUBO based routine that includes set of pre-trained weak learners that provide output for test values and weight adjustment process for these weak learners and after the discretized to model it as a QUBO; to encryption of the weights of the weak learners, at least one of bellow step or combination more than one with storing combination order in at least one storage medium;
- Using different encoding depths for different weights with the assigning the weights according to the correlation in between the weak learners with the registration of this encoding information;
- Shuffling the order of the variables randomly with the registering this order information;
- Converting the QUBO matrix, which is stored in at least one storage medium and generating a string which includes two different number whose length matches the solution space dimensionality and registering the strings with spin flipping these numbers;

To decryption of the data, which is received from at least one quantum device with encrypted by classical computing device before the transfer procedure using encoding information, order information, spin flipped result, combination order information or suitable combination of them according to the encryption.

In certain embodiments, creating an encrypted Quantum Annealing model ready to be processed by the local part of the algorithm. Also, decryption of the received results managed locally.

According to the disclosure, method can use combination of at least two of three encryption process. Combination/encryption order can be pre-defined on the classical computing device (30) and this information stored in at least one storage medium, which is related to the classical computing device (30), and the combination order information used for the decryption process.

In a preferred embodiment, the QBoost algorithm starts with a set of pre-trained weak learners that provide outputs for test values. Then, the optimization begins. The general scheme of the process is illustrated in Figure 1, which shows the QBoost workflow. The method includes selecting batches of weak learner candidates and selecting those that perform better than the others to construct the final strong classifier steps. This process is repeated with different values of the regularization parameter. Then, if the error of the entire candidate list increases and accuracy decreases, the search for selection weak learners continues, adding more candidates to the list.

In preferred embodiment of the disclosure, assignment of the different encoding depths for different weights of the weak learners can be managed on classical computing device (30) within initializing process. In this process, at least one computing unit (10) which part of the classical computing device (30) can encode each/every weights.

Another preferred embodiment of the method, assigning the encodings of the weights can be randomly.

Another preferred embodiment of the method, assignment of the encodings of the weights can be correlation in between the weak learners and the ground truth, which is correct outcomes against which the predictions or outputs of the algorithm are compared. Good weak learners that perform relatively well on the task at hand, meaning it has a strong correlation with the ground truth needs shallower encodings (e.g., a perfect weak learner may only need a one-bit encoding). Bad weak learners have weaker correlation with the ground truth and needs more encodings (longer bits) rather than good weak learners. (For ex. 1 bit for perfect good weak learner but 10 bits for bad weak learner). The weight of each weak learner is discretized and modeled as a QUBO for a Quantum Annealing process. Once the weights are discretized and modeled into a QUBO, the local encryption phase occurs. According to this embodiment, this solution save QPC space on the quantum device (20) and helps building resource-efficient encrypted model.

Another alternative embodiment of the method above mentioned alternative approaches can be extended by incorporating a section of uncoupled (or weakly coupled) qubits that hold random elements. To remain compatible with the rest of the problem, this partition must be either uncoupled or only weakly coupled with the other components and should exhibit matrix sparsity consistent with the remaining problem.

In certain embodiments, the encryption method also involves shuffling the order of the variables and/or weights which are related to the weak learners randomly and registering this order information with a registration key. Mentioned registered shuffling order can represent decryption key in a storage medium. This process is managed by a shuffling module (112). This step ensures that the encryption scheme is robust and adds an additional layer of security by making the order of the variables unpredictable.

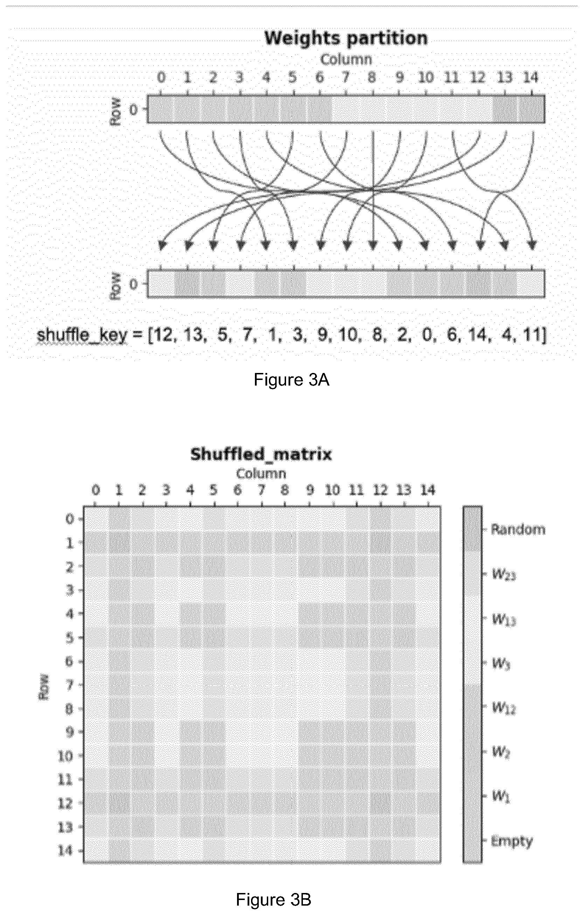

Figure 3A shows a shuffling key for a QUBO matrix and figure 3B shows a shuffled QUBO matrix example. This shuffling process can be done before or after the assignment of the different encoding depths. The number of variables (and logical qubits) required to represent a single weight of a weak learner is defined as the bit-depth. Each weak learner's weight can have a different bit-depth depending on the need. This bit-depth is essential for defining the variables accurately.

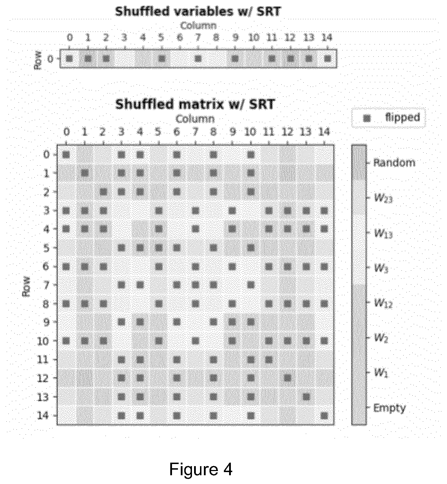

In certain embodiments, encryption steps involve checking the QUBO matrix and if the QUBO matrix has been constructed, first converting it into its equivalent Ising Hamiltonian form. This conversion is necessary for creating a private encryption key. The Ising Hamiltonian is a mathematical representation used in quantum computing to model the interactions between spins. By converting the QUBO matrix into the Ising Hamiltonian, the encryption method ensures that the resulting encryption key is secure and compatible with the quantum annealing process. After that, generating the encryption key with a string that includes two different numbers whose length matches the solution space dimensionality. In preferred embodiment, these strings are binary strings whose length matches the dimensionality of the solution space (In alternative embodiment, these strings can be different than 0s and 1s.). These strings are registered with spin flipping these numbers. Registering these strings is crucial for creating a private encryption key, which is used to ensure data security on the quantum server side. Figure 4 shows a QUBO matrix with shuffled and spin flipped weights.

In certain embodiment above mentioned disclosure with spin flip has a negligible impact on accuracy; in most cases, only one variable is needed. The number of variables (and logical qubits) required to represent a single weight of a weak learner is defined as the bit-depth. Each weak learner's weight can have a different bit-depth depending on the need.

In a preferred embodiment of the method, encryption diagonal elements by modifying the diagonal elements of the Ising Hamiltonian by changing their encryption signs according to the encryption key.

In a preferred embodiment of the method, encryption off-diagonal elements managed by changing the signs of the off-diagonal elements if the corresponding elements of the encryption key are discordant. Specifically, if the i-th element has a spin flip and the j-th element does not, the sign of the i, j-th element of the Hamiltonian is inverted. Similarly, if the j-th element has a spin flip while the i-th does not, the i, j-th element also undergoes a sign change. In cases where both or neither of the i-th and j-th elements have spin flips, the sign remains unchanged.

In a preferred embodiment, the weight of each weak learner is discretized and modeled as a QUBO for a Quantum Annealing process. Once the weights are discretized and modeled into a QUBO, the local encryption phase occurs. This creates an encrypted Quantum Annealing model, ready to be processed by the local part of the algorithm. The encryption key used in this phase is never shared, ensuring data security on the quantum server side. The encrypted weight data is then sent to the quantum server for the Quantum Annealing optimization process.

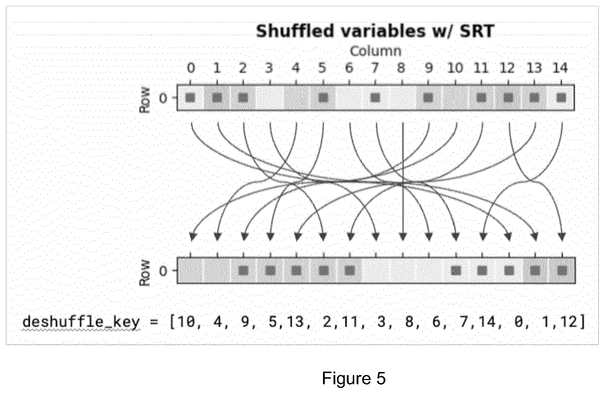

In certain embodiments, the decryption module (12) decrypts the data received from at least one quantum device (20), which was encrypted by the classical computing device (30) before the computing procedure. Figure 5 shows an example for private key for decryption process. The decryption process uses encoding information, order information, spin flipped result, combination order information, or a suitable combination of them according to the encryption. The decrypted output provides new optimized weights for the weak learner candidate list, and it is expected that the classification performance will improve after the optimization.

In alternative embodiment, weak learners with small weights may discard as they do not contribute significantly to the strong classifier's performance. Conversely, if the new weights are sufficiently relevant and improve the classification of the test data, the associated weak learners are added to the candidate list. This process is repeated until no more candidates are available or the strong classifier's error no longer decreases.

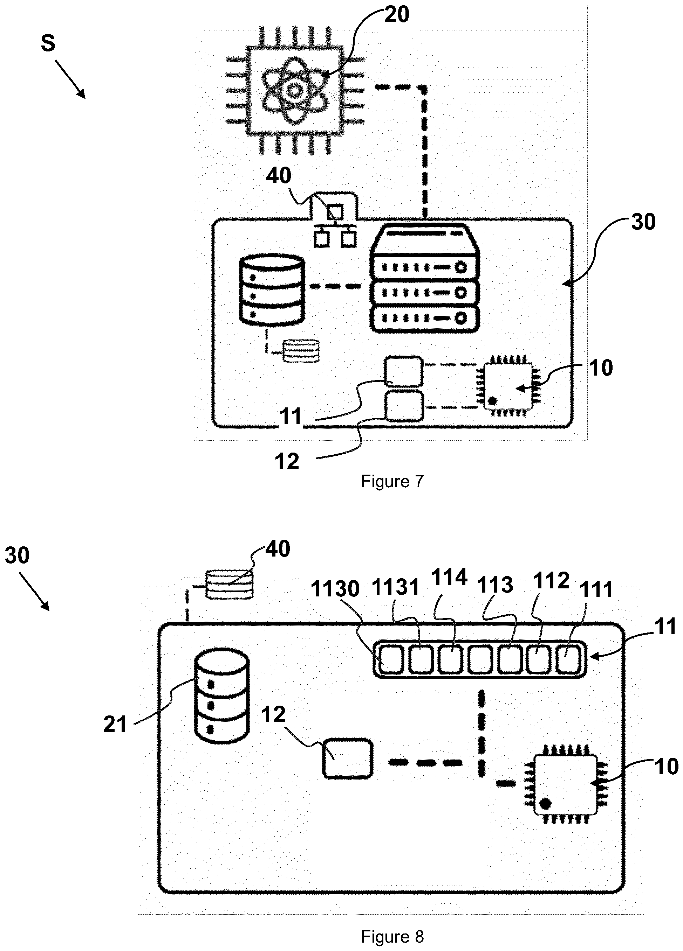

Figure 7 and Figure 8 shows alternative embodiment of the disclosure. According to the this, an encryption system (S) for secure communication between devices during quantum annealing or QUBO-based routines, which are executed on a quantum device (20) with configurations determined or supported by at least one classical computing device (30) according to the method that defined any of the above claims, the system (S) characterized by includes a main encoding module (111) that uses different encoding depths for different weights with the assigning the weights randomly according to the correlation in between the weak learners with the registration of this encoding information on QUBO model; a secondary encryption module (113) that converts the QUBO matrix, which is stored in at least one storage medium and generating a string with at least one string generation module (1130), with two different number whose length matches the solution space dimensionality and registers the strings that spin flipped with a flipping module (1131); a shuffling module (112) that changes the order of the variables randomly with the registering this order information with a registration key; a decryption module (12) decrypts of the data which is received from at least one quantum device with encrypted by classical computing device before the transfer procedure with using encoding information, order information, spin flipped result, combination order information or suitable combination of them according to the encryption.

In different embodiments, encryption keys are organized and stored with encryption key module (114). This module stores encryption combination order and all encryption keys for using decryption process.

In different embodiments, the encryption of weights in a quantum computing context involves several intricate steps. In certain embodiments, the process begins with the encryption of the weights, which may involve at least one of the following steps or a combination of more than one, with the combination order stored in at least one storage medium.

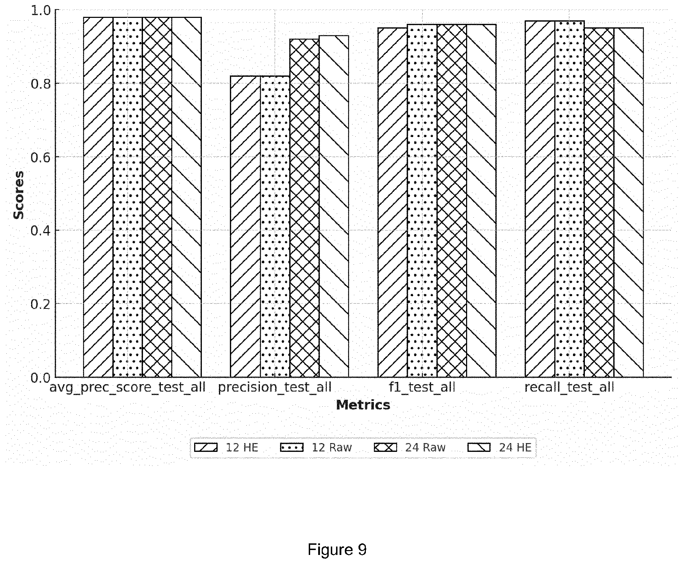

Figure 9 shows the performance of the encryption method. Results shows encrypted and unencrypted models has almost identical performance.

The method and system of the present disclosure can be applicable to any computation system with configurations as set out above. Can be useable any quantum simulation system that runs on a classical computer.

## Claims

1. An encryption method for secure communication between devices during quantum annealing or QUBO-based routines, which are executed on a quantum device with configurations determined or supported by at least one classical computing device, wherein the encryption and decryption of data are managed by the classical computing device, the method **characterized by**
Within a QUBO based routine that includes set of pre-trained weak learners that provide output for test values and weight adjustment process for these weak learners and after the discretized to model it as a QUBO;
To encryption of the weights of the weak learners, at least one of bellow step or combination more than one with storing combination order in at least one storage medium;
• Using different encoding depths for different weights with the assigning the weights according to the correlation in between the weak learners with the registration of this encoding information;
• Shuffling the order of the variables randomly with the registering this order information;
• Converting the QUBO matrix, which is stored in at least one storage medium and generating a string which includes two different number whose length matches the solution space dimensionality and registering the strings with spin flipping these numbers;
To decryption of the data which is received from at least one quantum device with encrypted by classical computing device before the transfer procedure using encoding information, order information, spin flipped result, combination order information or suitable combination of them according to the encryption.

2. An encryption method for a computing system according to the claim 1, **characterized by** selection batches of weak learners and selects those weak learners that perform better to construct the final strong classifier with repeating with different values of regularization parameter with checking the error.

3. An encryption method for a computing system according to the claim 2, if the error of the entire candidate list increases its accuracy, searching and adding for weak learner candidates to be added to the list.

4. An encryption method for a computing system according to the claim 1, **characterized by** converting the QUBO matrix, which is stored in at least one storage medium, into the equivalent Ising Hamiltonian with storing at least one storage medium, and generating a string which includes two different number whose length matches the solution space dimensionality and registering the strings with spin flipping these numbers to create private encryption key.

5. A method according to the claim 2, **characterized by** changing the diagonal elements of the Ising Hamiltonian accordingly to the encryption key.

6. A method according to claim 5, **characterized by** after converting the QUBO matrix and flipping the spins changing the signs of the weights of the weak learners according to the encryption key. Which created with registering the strings with spin flipping.

7. A method according to any one of the preceding claims, **characterized by** assigning weights according to correlation in between the weak learners and the ground truth.

8. A method according to any one of the preceding claims, 5 **characterized by**, after detecting the weak learners and encoding picked good weak learners to shallower/simplifier, which performs relatively well on the task at hand, and which has a strong correlation with the ground truth and encoding bad weak learners deeper.

9. A method according to any one of the preceding claims, **characterized by**, after detecting the weak learners and encoding picked bad weak learners to deeper with longer strings, which has weaker correlation with the ground truth rather than good weak learners.

10. This can be extended using a section of uncoupled (or weakly coupled) qubits holding random elements. To be compatible with the rest of the problem this partition needs to be uncoupled or very weakly couple with the rest of the problem and present a matrix sparsity matching the remaining part of the problem.

11. A computer program product comprising instructions which, when the program is executed by at least one computing unit (10), cause the at least one computing unit (10) to carry out a method according to any one of claims 1-9

12. A computer-readable data carrier having stored there on a computer program product according to claim 10.

13. An encryption system (S) for secure communication between devices during quantum annealing or QUBO-based routines, which are executed on a quantum device (20) with configurations determined or supported by at least one classical computing device (30) according to the method that defined any of the above claims, the system (S) **characterized by** including
• A main encoding module (111) that uses different encoding depths for different weights with the assigning the weights randomly according to the correlation in between the weak learners with the registration of this encoding information on QUBO model;
• A secondary encryption module (113) that converts the QUBO matrix, which is stored in at least one storage medium and generating a string with at least one string generation module (1130), with two different number whose length matches the solution space dimensionality and registers the strings that spin flipped with a flipping module (1131);
• A shuffling module (112) that changes the order of the variables randomly with the registering this order information with a registration key;
A decryption module (12) decrypts of the data which is received from at least one quantum device with encrypted by classical computing device before the transfer procedure with using encoding information, order information, spin flipped result, combination order information or suitable combination of them according to the encryption.

14. The system (S) according to the claim 13 comprises, at least one classical computer that includes a processor that initialized the data and at least one quantum device (20) that communicated the classical computer and includes at least one quantum processor as a computing unit (10).

## Amended claims

### Amended claims in accordance with Rule 137(2) EPC.

1. An encryption method for secure communication between at least one quantum device (20) and at least one classical computing device (30) which is configured to determination or supporting configurations to the quantum device (20) during quantum annealing or QUBO-based routines for a machine learning model, which are executed on a quantum device (20) wherein the encryption and decryption of data are managed by the classical computing device (30), the method **characterized by** discretizing the model it as a QUBO, within a QUBO-based routine includes set of pre-trained weak learners that provide output for test values and weight adjustment process for these weak learners;
at least one storage medium of the classical computing device is configured to encryption of the weights of the weak learners with a combination in between following steps:
• Using different encoding depths for different weights with the assigning the weights according to the correlation in between the weak learners with the registration of this encoding information;
• Shuffling randomly order of weight shuffle elements of a QUBO matrix with the registering this order information;
• Converting the QUBO matrix into the Ising Hamiltonian, which is stored in the one storage medium and generating a string which includes two different number whose length matches solution space dimensionality and registering the strings with spin flipping these numbers;
employing decryption procedure on data which received by the classical computing device (30) from the quantum device (20) which encrypted by the classical computing device before transfer procedure for quantum computation, using by encoding information, order information, spin flipped result, combination order information or suitable combination of them according to the encryption of the weights.

2. An encryption method for a computing system according to the claim 1, **characterized by** selection batches of weak learners and selects those weak learners that perform better to construct the final strong classifier with repeating with different values of regularization parameter with checking the error.

3. An encryption method for a computing system according to the claim 2, **characterized by** if the error of the entire candidate list increases its accuracy, searching and adding for weak learner candidates to be added to the list.

4. An encryption method for a computing system according to the claim 1, **characterized by** converting the QUBO matrixstored in at least one storage medium, into the equivalent Ising Hamiltonian with storing in the storage medium, and generating a string which includes two different number whose length matches the solution space dimensionality and registering the strings with spin flipping these numbers to create private encryption key.

5. A method according to the claim 4, **characterized by** changing the diagonal elements of the Ising Hamiltonian accordingly to the encryption key.

6. A method according to claim 5, **characterized by** flipping the spins changing the signs of the weights of the weak learners according to the encryption key, which created by registering the strings with spin flipping after converting the QUBO matrix.

7. A method according to any one of the preceding claims, **characterized by** assigning weights according to correlation in between the weak learners and the ground truth.

8. A method according to any one of the preceding claims, **characterized by**, encoding picked good weak learners to shallower/simplifier after detecting the weak learners, which performs relatively well on the task at hand, and has a strong correlation with the ground truth and encoding bad weak learners deeper.

9. A method according to any one of the preceding claims, **characterized by**, encoding picked bad weak learners to deeper with longer strings after detecting the weak learners, which has weaker correlation with the ground truth rather than good weak learners.

10. An encryption system (S) comprises, at least one classical computing device (20) includes a processor initializes data and at least one quantum device (20) communicated the classical computing device (30) that includes at least one quantum processor as a computing unit (10); to providing secure communication between the devices (20,30) during quantum annealing or QUBO-based routines, which are executed on the quantum device (20) by configurations determined or supported by the classical computing device (30) according to the method that defined any of the above claims, the system (S) comprising
• A main encoding module (111) uses different encoding depths for different weights with the assigning the weights according to the correlation in between the weak learners with the registration of this encoding information on QUBO model;
• A secondary encryption module (113) converts the QUBO matrix into the Ising Hamiltonian, storing by in at least one storage medium and generates a string with at least one string generation module (1130)with two different number whose length matches with solution space dimensionality and registers the strings that have spin flipped by a flipping module (1131);
• A shuffling module (112) changes the order of the variables randomly with the registering this order information with a registration key;
A decryption module (12) decrypts the model data, which is received from the quantum device (30) as encrypted by the classical computing device (20) before the transfer procedure using by the encoding information, the order information, spin flipped result, combination order information or suitable combination of them according to the encryption that provided by encoding modules (111,113), and shuffling module (112) .

11. A computer program product comprising instructions which, when the program is executed by at least one computing unit (10), cause the at least one computing unit (10) to carry out a method according to any one of claims 1-9

12. A computer-readable data carrier having stored there on a computer program product according to claim 10.
